# EUROPÄISCHE PATENTANMELDUNG

(11) **EP 2 815 835 A1**
(43) Veröffentlichungstag der Anmeldung: **24.12.2014**
(21) Anmeldenummer: 14167151.1
(22) Anmeldetag: 06.05.2014
(51) Int. Cl.: B23D 61/04

(54) **Sägeblatt mit kleinem Sägezahn**

(30) Priorität: 21.06.2013 DE 202013102690 U
(71) Anmelder: Albert Knebel GmbH & Co. KG Holding, 72336 Balingen (DE)
(72) Erfinder: Knebel, Alexander, 72336 Balingen (DE)
(74) Vertreter: Kohler Schmid Möbus

(57) **Zusammenfassung**

Die Erfindung betrifft einen Sägezahn (12a) für ein Sägeblatt (10a), der in seiner Längsrichtung zumindest teilweise von einem Sägeblattkörper (14a) des Sägeblatts (10a) abstehend an dem Sägeblattkörper (14a - 14d) befestigbar ist, wobei der Sägezahn (12a) einen Schneidflächenteil (15a) mit einer Schneidfläche (16a) aufweist, deren Höhe (H_{S}) sich in Längsrichtung erstreckt und deren Breite (B_{S}) sich senkrecht zur Längsrichtung erstreckt und die Breite (B_{S}) der Schneidfläche (16a) größer ist als die Höhe (H_{S}) der Schneidfläche (16a).

## Beschreibung

Die Erfindung betrifft einen Sägezahn für ein Sägeblatt, der in seiner Längsrichtung zumindest teilweise von einem Sägeblattkörper des Sägeblatts abstehend an dem Sägeblattkörper befestigbar ist, wobei der Sägezahn einen Schneidflächenteil mit einer Schneidfläche aufweist, deren Höhe sich in Längsrichtung erstreckt und deren Breite sich senkrecht zur Längsrichtung erstreckt.

Die Erfindung betrifft weiterhin ein Sägeblatt mit zumindest einem Sägezahn.

Es ist bekannt, Sägeblattkörper von Sägeblättern mit Sägezähnen zu bestücken. Nach dem Bestücken des Sägeblattkörpers ist eine Schleif-, Laser- und/oder Erodierbearbeitung nötig, um den Sägezähnen ihre endgültige Form und Schärfe zu geben. Um diese Bearbeitung in kurzer Zeit durchführen zu können, ist es vorteilhaft, die Sägezähne möglichst klein auszubilden.

Klein ausgebildete Sägezähne weisen weiterhin den Vorteil geringer Geräuschentwicklung, insbesondere bei schnell drehenden Kreissägeblättern, auf. Ferner zeigen klein ausgebildete Sägezähne eine höhere Stabilität gegen seitliches Auslenken und axiale Schwingungsbewegungen, wodurch eine verbesserte Schnittqualität und eine längere Standzeit des Sägeblatts erzielt werden kann.

Schließlich werden Sägezähne oftmals mit teuren Beschichtungen, insbesondere diamantbasierten Beschichtungen, versehen. Bei der Herstellung kleiner Sägezähne wird nur wenig Beschichtungsmaterial verbraucht, wodurch die Sägezähne kostengünstig produziert werden können.

Bei kleinen Sägezähnen besteht jedoch die Gefahr einer nicht ausreichenden Haftung der Sägezähne am Sägeblattkörper, da nur eine kleine Verbindungsfläche zwischen den einzelnen Sägezähnen und dem Sägeblattkörper zur Verfügung steht und die Stabilität der Verbindung in hohem Maß von der Größe der Verbindungsfläche abhängt.

Der Erfindung liegt daher die Aufgabe zugrunde, einen Sägezahn und ein Sägeblatt bereitzustellen, bei denen auch im Falle kleiner Abmessungen des Sägezahns eine gute Verbindung zwischen Sägezahn und Sägeblattkörper ermöglicht wird.

Diese Aufgabe wird erfindungsgemäß durch einen Sägezahn für ein Sägeblatt gelöst, der in seiner Längsrichtung zumindest teilweise von einem Sägeblattkörper des Sägeblatts abstehend an dem Sägeblattkörper befestigbar ist, wobei der Sägezahn einen Schneidflächenteil mit einer Schneidfläche aufweist, deren Höhe sich in Längsrichtung erstreckt und deren Breite sich senkrecht zur Längsrichtung erstreckt, wobei die Breite der Schneidfläche größer ist als die Höhe der Schneidfläche.

Aufgrund der im Vergleich zur Breite geringen Höhe wirken nur geringe Hebelkräfte auf den Sägezahn. Der Sägezahn kann dadurch sicher an dem Sägeblatt befestigt werden.

In besonders bevorzugter Ausgestaltung der Erfindung weist der Sägezahn einen in Längsrichtung von der Schneidfläche abstehenden Befestigungsvorsprung auf. Der Befestigungsvorsprung kann fest an dem Sägeblattkörper verankert werden, wodurch eine besonders stabile Verbindung des Sägezahns mit dem Sägeblatt hergestellt werden kann. Der Befestigungsvorsprung kann auch als "Fertsatz" bezeichnet werden, während der Schneidflächenteil mit der Schneidfläche den "Arbeitsteil" des Sägezahns darstellt.

Der Befestigungsvorsprung kann in Längsrichtung beliebig lang ausgebildet sein. Der Befestigungsvorsprung kann in Längsrichtung größer sein als in der Breite. Vorzugsweise ist der Befestigungsvorsprung in Längsrichtung größer als die Höhe der Schneidfläche. Die an dem Sägezahn angreifenden Hebelkräfte können dadurch gut kompensiert werden.

Die Breite des Befestigungsvorsprungs kann kleiner sein als die Breite der Schneidfläche. Hierdurch ergibt sich ein insgesamt zapfenförmig ausgebildeter Befestigungsvorsprung des Sägezahns. Ein solcher Befestigungsvorsprung kann in eine Befestigungsausnehmung des Sägeblatts eingeführt werden.

Der Sägezahn kann eine sich senkrecht zur Höhe der Schneidfläche und senkrecht zur Breite der Schneidfläche erstreckende Dicke aufweisen, wobei die Dicke des Schneidflächenteils der Dicke des Befestigungsvorsprungs entspricht. Mit anderen Worten kann der Sägezahn, in Schnittrichtung gesehen, eine einheitliche Dicke aufweisen. Der Sägezahn ist dadurch besonders einfach fertigbar.

Alternativ dazu kann die Dicke des Schneidflächenteils größer sein als die Dicke des Befestigungsvorsprungs. Hierdurch wird ein Anschlag zwischen Befestigungsvorsprung und Schneidflächenteil des Sägezahns ausgebildet, bis zu dem der Sägezahn in eine Befestigungsausnehmung des Sägeblatts einführbar ist. Der Sägezahn kann sich beim Sägen über den Anschlag an dem Sägeblattkörper abstützen.

Zumindest ein Übergang zwischen dem Schneidflächenteil und dem Befestigungsvorsprung kann abgerundet ausgebildet sein. Durch eine solche Abrundung kann eine unerwünschte Kerbwirkung und dadurch eine Rissbildungsgefahr vermieden werden. Die Abrundung ist vorzugsweise an einer Seite des Sägezahns vorgesehen, deren Fläche senkrecht zur Schneidfläche ausgebildet ist.

Vorzugsweise sind alle Übergänge zwischen dem Schneidflächenteil und dem Befestigungsvorsprung abgerundet ausgebildet. Kerbwirkung und Rissbildung können dadurch besonders effektiv vermieden werden. Gemäß einer besonders bevorzugten Ausführungsform weist die Schneidfläche eine Beschichtung auf, deren Härte größer ist als die Härte des übrigen Schneidflächenteils. Beispielsweise kann die Schneidfläche aus einer Diamantschicht und der Schneidflächenteil - bis auf die Schneidfläche - aus Hartmetall bestehen. Die Beschichtung ist vorzugsweise aus polykristallinem Diamant (PKD) ausgebildet. Vorzugsweise ist die Härte der Beschichtung größer als die Härte des restlichen Sägezahns. Die Beschichtung kann eine beliebige Dicke aufweisen.

Auch der Befestigungsvorsprung kann zumindest teilweise die Beschichtung aufweisen. Vorzugsweise weist der Befestigungsvorsprung jedoch keine Beschichtung auf, um eine gut benetzende Lötverbindung zwischen dem Sägezahn und dem Sägeblattkörper herstellen zu können. Weist der Befestigungsvorsprung keine Beschichtung auf, so kann er sowohl an der Rückseite als auch an der Unterseite und an der Vorderseite mit Lot benetzt werden. Hieraus resultiert eine sehr starke Verbindung zwischen dem Sägezahn und dem Sägeblattkörper. Die Beschichtung kann dabei durch Schleifen, Laserbearbeitung oder ein anderes geeignetes Verfahren entfernt werden.

Der Sägezahn kann eine Positionierungsausnehmung und/oder einen Positionierungsvorsprung aufweisen. Insbesondere kann die Positionierungsausnehmung und/oder der Positionierungsvorsprung am Befestigungsvorsprung ausgebildet sein. Durch die Positionierungsausnehmung bzw. den Positionierungsvorsprung kann der Sägezahn auf einfache Art und Weise positionsgenau mit dem Sägeblattkörper verbunden werden. Die Positionierungsausnehmung kann dabei Faseneinkerbungen, Schrägen, Radien und/oder sonstige geometrische Formen aufweisen.

Die Erfindung betrifft weiterhin ein Sägeblatt mit einem Sägeblattkörper und zumindest einem zuvor beschriebenen Sägezahn, wobei der Sägezahn in einer Sägezahnaufnahme des Sägeblattkörpers befestigt ist. Vorzugsweise sind an dem Sägeblattkörper mehrere zuvor beschriebene Sägezähne befestigt. Die Sägezähne können dabei regelmäßig oder unregelmäßig entlang eines Zahnträgerbereichs des Sägeblattkörpers verteilt sein. Die Befestigung des Sägezahns am Sägeblattkörper erfolgt dabei vorzugsweise durch eine Klemm-, Kleb-, Löt- und/oder Schweißverbindung.

Die Sägezahnaufnahme kann einen mit der Positionierungsausnehmung korrespondierenden Positionsvorsprung und/oder eine mit dem Positionierungsvorsprung korrespondiere Positionsausnehmung aufweisen, um den Sägezahn bei der Montage exakt relativ zu dem Sägeblattkörper ausrichten zu können.

Gemäß einer Ausgestaltung der Erfindung kann die Tiefe der Sägezahnaufnahme in Schnittrichtung des Sägeblatts der Dicke des Schneidflächenteils und/oder der Dicke des Befestigungsvorsprungs entsprechen. Der Sägezahn kann dadurch, in Schnittrichtung gesehen, in den Sägeblattkörper eingepasst werden. Durch den Kontakt an der Vorderseite und der Rückseite des Sägezahns (jeweils in Schnittrichtung gesehen) mit dem Sägeblattkörper kann der Sägezahn besonders sicher am Sägeblattkörper befestigt werden. Zusätzlich dazu kann der Sägezahn durch eine Löt-, Kleb- und/oder Schweißverbindung an dem Sägeblattkörper befestigt werden, um eine sehr starke Verbindung zwischen Sägezahn und Sägeblattkörper zu erreichen.

Die Tiefe der Sägezahnaufnahme des Sägeblattkörpers in Schnittrichtung des Sägeblatts kann jedoch auch größer sein als die Dicke des Schneidflächenteils. Hierdurch kann, in Schnittrichtung gesehen, hinter dem Sägezahnrücken ein Spanraum geschaffen werden. Dabei dient die dem Sägezahnrücken gegenüberliegende Vorderseite des Sägezahns zumindest teilweise als Verbindungsfläche zum Sägeblattkörper. Alternativ dazu kann der Sägezahnrücken mit dem Sägeblattkörper verbunden werden, wodurch sich ein Spanraum vor der Vorderseite des Sägezahns ergibt.

Das Sägeblatt kann in Form eines Kreissägenblatts, eines Bandsägenblatts, eines scheibenförmigen Fräsers oder eines Bügelsägenblatts ausgebildet sein.

Weitere Merkmale und Vorteile der Erfindung ergeben sich aus der nachfolgenden detaillierten Beschreibung mehrerer Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind nicht notwendigerweise maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind mehrere Ausführungsbeispiele der Erfindung dargestellt und in der nachfolgenden Beschreibung näher erläutert.

Es zeigen:
- Fig. 1: einen Ausschnitt einer Vorderansicht eines ersten Sägeblatts mit einem ersten Sägezahn;
- Fig. 2: eine Vorderansicht eines zweiten Sägezahns;
- Fig. 3: eine Vorderansicht eines dritten Sägezahns;
- Fig. 4: eine Vorderansicht eines vierten Sägezahns;
- Fig. 5: eine Vorderansicht eines fünften Sägezahns;
- Fig. 6: eine Vorderansicht eines sechsten Sägezahns;
- Fig. 7a: eine Vorderansicht eines siebten Sägezahns;
- Fig. 7b: eine Seitenansicht des siebten Sägezahns;
- Fig. 7c: eine Seitenansicht eines achten Sägezahns;
- Fig. 7d: eine Seitenansicht eines neunten Sägezahns;
- Fig. 7e: eine Seitenansicht eines zehnten Sägezahns;
- Fig. 7f: eine Seitenansicht eines elften Sägezahns;
- Fig. 8a: einen Ausschnitt einer Seitenansicht eines zweiten Sägeblatts mit einem zwölften Sägezahn und einem dreizehnten Sägezahn;
- Fig. 8b: eine Seitenansicht des zwölften Sägezahns in Alleinstellung;
- Fig. 9: einen Ausschnitt einer Seitenansicht eines dritten Sägeblatts mit einem vierzehnten Sägezahn und einem fünfzehnten Sägezahn;
- Fig. 10a: eine Vorderansicht eines sechzehnten Sägezahns;
- Fig. 10b: eine Vorderansicht eines siebzehnten Sägezahns;
- Fig. 10c: eine Vorderansicht eines achtzehnten Sägezahns;
- Fig. 11a: eine Vorderansicht eines neunzehnten Sägezahns;
- Fig. 11b: eine Vorderansicht eines zwanzigsten Sägezahns; und
- Fig. 12: einen Ausschnitt einer Seitenansicht eines vierten Sägeblattes mit einem einundzwanzigsten Sägezahn und einem zweiundzwanzigsten Sägezahn.

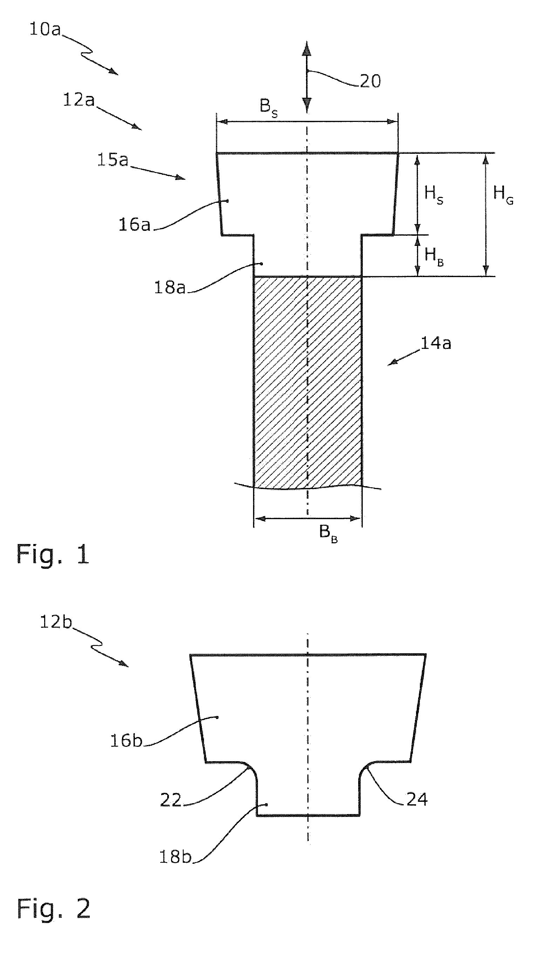

Fig. 1 zeigt eine Vorderansicht eines ersten Sägeblatts 10a mit einem ersten Sägezahn 12a. Der erste Sägezahn 12a ist an einem Sägeblattkörper 14a befestigt. Der Sägeblattkörper 14a ist geschnitten dargestellt. Der erste Sägezahn 12a weist einen Schneidflächenteil 15a mit einer Schneidfläche 16a auf. Die Schneidfläche 16a bildet die Vorderseite des Schneidflächenteils 15a. Ein Befestigungsvorsprung 18a des ersten Sägezahns 12a schließt sich an den Schneidflächenteil 15a an. Ein Doppelpfeil 20 zeigt die Längsrichtung des ersten Sägeblatts 10a bzw. des ersten Sägezahns 12a. Der erste Sägezahn 12a steht in der Längsrichtung von dem Sägeblattkörper 14a ab.

In Längsrichtung weist die Schneidfläche 16a eine Höhe H_{S} auf. Senkrecht zu dieser Höhe H_{S} weist die Schneidfläche 16a eine Breite B_{S} auf. Die Breite B_{S} ist mehr als doppelt so groß wie die Höhe H_{S} der Schneidfläche 16a. Hierdurch kann der erste Sägezahn 12a sicher an dem Sägeblattkörper 14a befestigt werden, ohne dass es zu einem Abheben des ersten Sägezahns 12a von dem Sägeblattkörper 14a durch Hebelkräfte beim Sägen kommen könnte.

Der erste Sägezahn 12a ist an seiner Rückseite im Bereich der Schneidfläche 16a an dem Sägeblattkörper 14a befestigt. Die Haltekraft des ersten Sägezahns 12a am Sägeblattkörper 14a wird durch den Befestigungsvorsprung 18a weiter vergrößert. Der Befestigungsvorsprung 18a weist in Längsrichtung eine Höhe H_{B} und senkrecht zur Längsrichtung eine Breite B_{B} auf. Die Gesamthöhe H_{G} aus Schneidflächenhöhe H_{S} und Befestigungsvorsprungshöhe H_{B} ist kleiner als die Breite B_{S} der Schneidfläche 16a.

Die Breite B_{B} des Befestigungsvorsprungs 18a ist der Breite des Sägeblattkörpers 14a angepasst. Anders ausgedrückt ist die Breite B_{B} des Befestigungsvorsprungs 18a identisch zu der Breite des Sägeblattkörpers 14a.

Fig. 2 zeigt eine Vorderansicht eines zweiten Sägezahns 12b, der im Wesentlichen dem ersten Sägezahn 12a gemäß Fig. 1 entspricht. Im Gegensatz zu dem ersten Sägezahn 12a ist der zweite Sägezahn 12b zwischen einer Schneidfläche 16b und einem Befestigungsvorsprung 18b abgerundet ausgebildet. Die Rundungen sind mit den Bezugszeichen 22 und 24 versehen. Durch die Rundungen 22 und 24 wird die Gefahr einer Rissbildung durch Kerbwirkung an dem zweiten Sägezahn 12b vermindert.

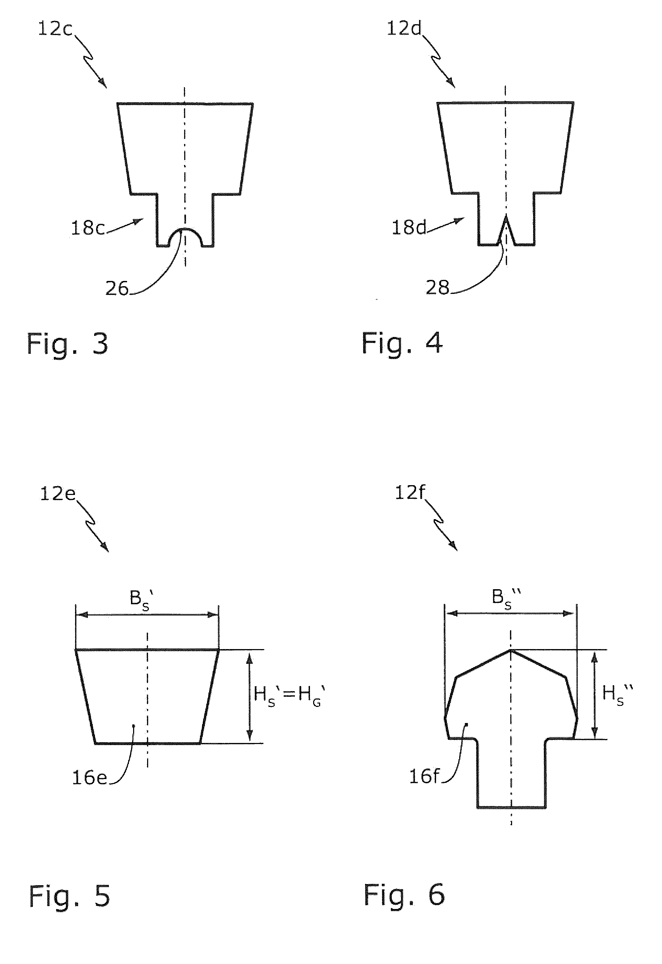

Fig. 3 zeigt eine Vorderansicht eines dritten Sägezahns 12c, der an einem Befestigungsvorsprung 18c eine runde Positionierungsausnehmung 26 aufweist. Durch die runde Positionierungsausnehmung 26 kann der dritte Sägezahn 12c relativ zu einem Sägeblattkörper (nicht gezeigt) positioniert und montiert werden.

Fig. 4 zeigt eine Vorderansicht eines vierten Sägezahns 12d mit einem Befestigungsvorsprung 18d. Der Befestigungsvorsprung 18d weist eine kerbenförmige Positionierungsausnehmung 28 auf. Die kerbenförmige Positionierungsausnehmung 28 ist zur exakten Positionierung des vierten Sägezahns 12d an einem passenden Sägeblattkörper (nicht gezeigt) vorgesehen.

Fig. 5 zeigt eine Vorderansicht eines fünften Sägezahns 12e in Form eines Flachzahns. Eine Schneidfläche 16e des fünften Sägezahns 12e weist eine Höhe H_{S}' auf, die kleiner ist als eine Breite B_{S}' der Schneidfläche 16e. Der fünfte Sägezahn 12e weist keinen Befestigungsvorsprung auf. Die Höhe H_{S}' entspricht daher der Gesamthöhe H_{G}'.

Fig. 6 zeigt einen sechsten Sägezahn 12f in Form eines Dachzahns. Auch eine Schneidfläche 16f des sechsten Sägezahns 12f weist eine größere Breite B_{S}" als Höhe H_{S}" auf.

Allgemein gesagt kann der Sägezahn eine beliebige geeignete Schneidengeometrie, beispielsweise auch die Form eines Trapezzahns oder Wechselzahns (nicht gezeigt), aufweisen.

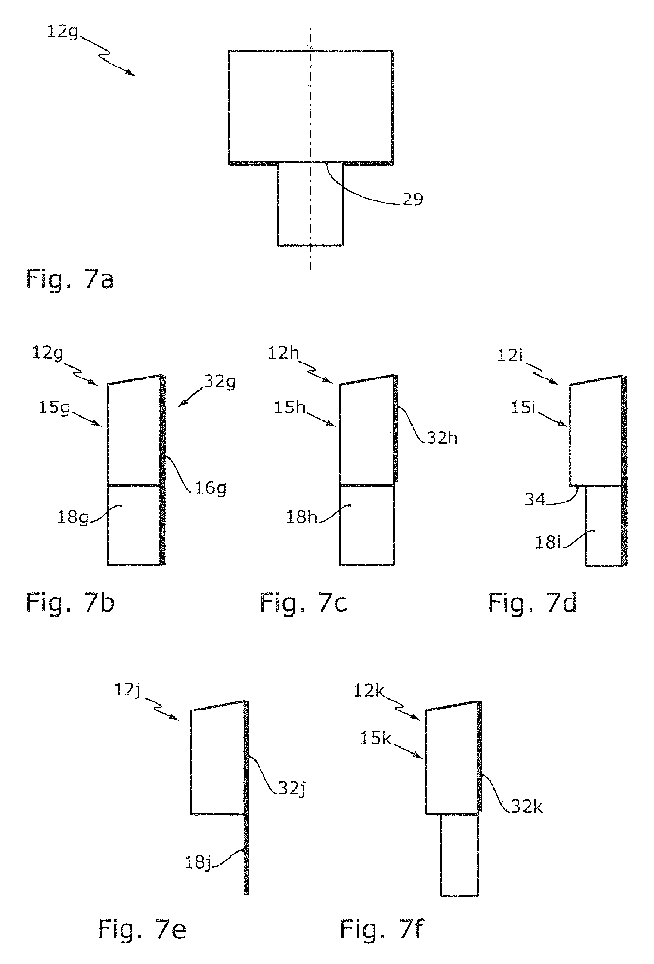

Fig. 7a zeigt eine Vorderansicht eines siebten Sägezahns 12g. Die Vorderansicht des siebten Sägezahns 12g entspricht der Vorderansicht der nachfolgend beschriebenen Sägezähne gemäß den Fig. 7b - 7f, wobei eine Konturkante 29 nur in der zu den Fig. 7c und 7f korrespondierenden Vorderansicht sichtbar ist.

Fig. 7b zeigt den siebten Sägezahn 12g in einer Seitenansicht. Der siebte Sägezahn 12g weist einen Schneidflächenteil 15g und einen Befestigungsvorsprung 18g auf. Die Vorderseite des siebten Sägezahns 12g ist mit einer Beschichtung 32g versehen. Die Beschichtung 32g erstreckt sich dabei sowohl über die Vorderseite des Schneidflächenteils 15g, d.h. über die Schneidfläche 16g, als auch über die Vorderseite des Befestigungsvorsprungs 18g.

Fig. 7c zeigt eine Seitenansicht eines achten Sägezahns 12h mit einem Schneidflächenteil 15h, einem Befestigungsvorsprung 18h und einer Beschichtung 32h. Die Beschichtung 32h ist lediglich an der Vorderseite des Schneidflächenteils 15h vorgesehen. Der Befestigungsvorsprung 18h weist hingegen keine Beschichtung auf. Hierdurch kann der achte Sägezahn 12h über den Befestigungsvorsprung 18h leicht mit einem entsprechenden Sägeblattkörper (nicht gezeigt) verlötet verschweißt und/oder verklebt werden.

In Fig. 7d ist eine Seitenansicht eines neunten Sägezahns 12i gezeigt. Der neunte Sägezahn 12i entspricht im Wesentlichen dem siebten Sägezahn 12g gemäß Fig. 7b, wobei ein Befestigungsvorsprung 18i im Gegensatz zu dem Befestigungsvorsprung 18g an seiner Rückseite dünner ausgebildet ist. Hierdurch wird zwischen dem Befestigungsvorsprung 18i und einem Schneidflächenteil 15i eine Stufe 34 ausgebildet. Über die Stufe 34 kann sich der Schneidflächenteil 15i beim Sägen an einem Sägeblattkörper (nicht gezeigt) abstützen. Hierdurch kann die Belastbarkeit des neunten Sägezahns 12i beim Sägen erhöht werden.

Fig. 7e zeigt einen zehnten Sägezahn 12j, der im Wesentlichen dem neunten Sägezahn 12i gemäß Fig. 7d entspricht. Bei dem zehnten Sägezahn 12j ist jedoch die Dicke eines Befestigungsvorsprungs 18j so weit reduziert, dass lediglich eine Beschichtung 32j übrig bleibt.

Fig. 7f zeigt einen elften Sägezahn 12k. Der elfte Sägezahn 12k entspricht im Wesentlichen dem neunten Sägezahn 12i gemäß Fig. 7d, wobei im Gegensatz zu dem neunten Sägezahn 12i lediglich ein Schneidflächenteil 15k eine Beschichtung 32k aufweist.

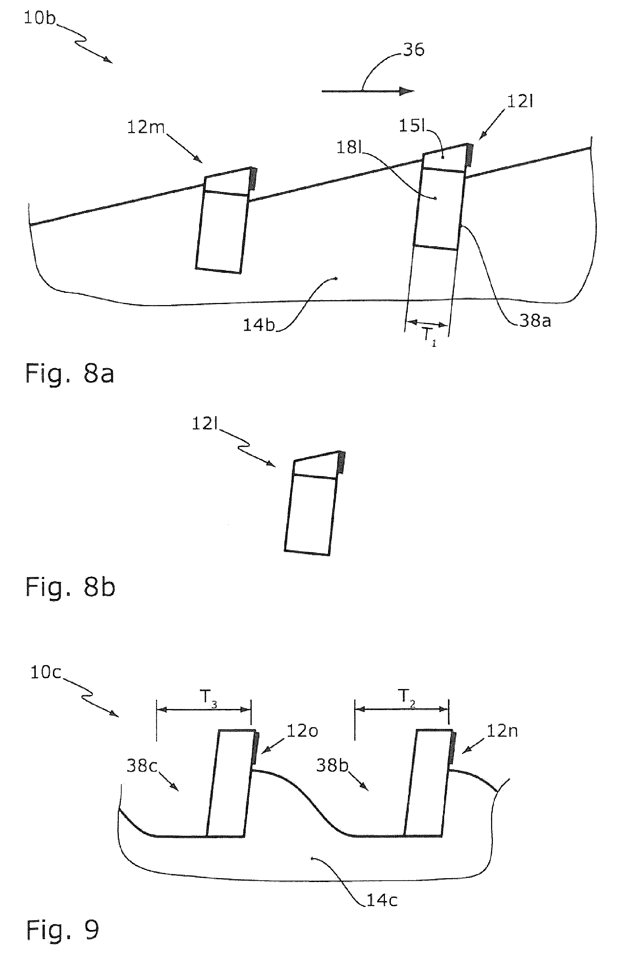

In Fig. 8a ist eine Seitenansicht eines zweiten Sägeblatts 10b ausschnittsweise dargestellt. Das zweite Sägeblatt 10b weist einen Sägeblattkörper 14b auf. An dem Sägeblattkörper 14b sind ein zwölfter Sägezahn 12l sowie ein dreizehnter Sägezahn 12m befestigt. Ein Pfeil 36 zeigt die Schnittrichtung des zweiten Sägeblatts 10b.

In Fig. 8b ist der zwölfte Sägezahn 121 ohne das zweite Sägeblatt 10b dargestellt. Aus einem Vergleich der Fig. 8a und 8b wird ersichtlich, dass der zwölfte Sägezahn 12l gemäß Fig. 8a durch eine Presspassung in dem Sägeblattkörper 14b verankert ist. Ebenso ist der dreizehnte Sägezahn 12m in dem Sägeblattkörper 14b durch eine Presspassung verankert, wobei die Sägezähne 12l und 12m identisch ausgebildet sind. Alternativ oder zusätzlich zu der Befestigung der Sägezähne durch eine Presspassung kann ein Sägezahn 12l, 12m oder können alle Sägezähne 12l, 12m anderweitig an dem Sägeblattkörper 14b befestigt, insbesondere gelötet, geschweißt und/oder geklebt, werden.

Zur Aufnahme des zwölften Sägezahns 12l ist gemäß Fig. 8a in dem Sägeblattkörper 14b eine Sägezahnaufnahme 38a vorgesehen. Die Sägezahnaufnahme 38a ist im Wesentlichen U-förmig ausgebildet. Die Tiefe der Sägezahnaufnahme 38a ist mit T₁ bezeichnet. Die Tiefe T₁ der Sägezahnaufnahme 38a entspricht der Dicke eines Schneidflächenteils 15l sowie der Dicke eines Befestigungsvorsprungs 18l des zwölften Sägezahns 12l. Hierdurch kann der zwölfte Sägezahn 12l sicher an dem Sägeblattkörper 14b gehalten werden.

Fig. 9 zeigt einen Ausschnitt einer Seitenansicht eines dritten Sägeblatts 10c mit einem Sägeblattkörper 14c. An dem Sägeblattkörper 14c sind ein vierzehnter Sägezahn 12n und ein fünfzehnter Sägezahn 12o befestigt. Der vierzehnte Sägezahn 12n und der fünfzehnte Sägezahn 12o sind identisch ausgebildet. Der Sägeblattkörper 14c weist eine Sägezahnaufnahme 38b und eine Sägezahnaufnahme 38c auf. Die Tiefe der Sägezahnaufnahme 38b ist mit T₂, die Tiefe der Sägezahnaufnahme 38c mit T₃ bezeichnet. T₂ und T₃ sind größer als die jeweilige Dicke des vierzehnten Sägezahns 12n bzw. des fünfzehnten Sägezahns 12o. Das dritte Sägeblatt 10c weist hierdurch in Bezug auf die Schnittrichtung hinter dem vierzehnten Sägezahn 12n und dem fünfzehnten Sägezahn 12o jeweils einen Spanraum auf.

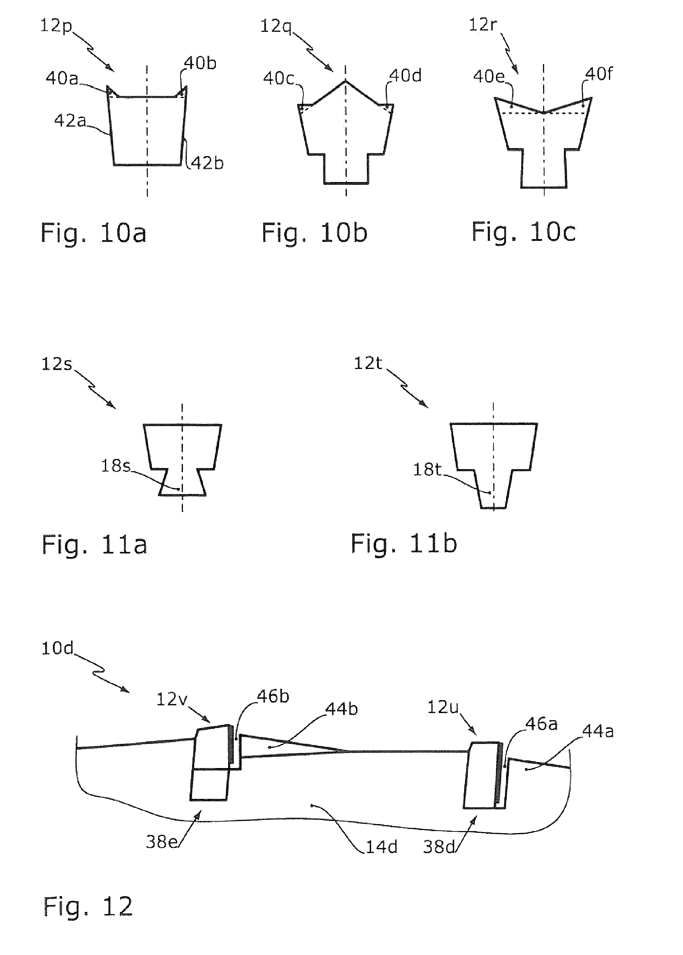

Fig. 10a zeigt einen sechzehnten Sägezahn 12p in der Vorderansicht. Im Gegensatz zu den zuvor beschriebenen Sägezähnen weist der sechzehnte Sägezahn 12p zwei Messvorsprünge 40a, 40b auf. Durch die Messvorsprünge 40a, 40b ergibt sich eine Verlängerung der Seitenflächen 42a, 42b des sechzehnten Sägezahns 12p. Die Messvorsprünge 40, 40b erlauben eine genaue Messbarkeit und Einstellbarkeit der Lage und der Neigungswinkel (Radialwinkel) der Seitenflächen 42a, 42b bei deren Schleif- oder Erodierbearbeitung. Nachdem der sechzehnte Sägezahn 12p - wie in Fig. 10a dargestellt - gefertigt ist, werden die Messvorsprünge 40a, 40b entlang der gestrichelten Linien abgetragen und sind am "fertigen" Sägezahn nicht mehr vorhanden.

Fig. 10b zeigt einen siebzehnten Sägezahn 12q. Um die Geometrie des siebzehnten Sägezahns 12q genau bestimmen zu können, weist dieser Messvorsprünge 40c, 40d auf. Nachdem die gewünschte Geometrie - wie dargestellt - erreicht ist, werden die Messvorsprünge 40c, 40d entlang der gestrichelten Linien entfernt.

Fig. 10c zeigt einen achtzehnten Sägezahn 12r. Auch die Geometrie des achtzehnten Sägezahns 12r kann bei der Fertigung durch entsprechende Messvorsprünge, hier die Messvorsprünge 40e, 40f, exakt bestimmt und überprüft werden. Hiernach können die Messvorsprünge 40e, 40f entlang der gestrichelten Linien entfernt werden.

Fig. 11a zeigt einen neunzehnten Sägezahn 12s mit einem Befestigungsvorsprung 18s. Der Befestigungsvorsprung 18s ist nach unten hin, das heißt zu einem Sägeblattkörper (nicht gezeigt) hin, breiter ausgebildet. Der Befestigungsvorsprung ist dadurch im Wesentlichen schwalbenschwanzförmig ausgebildet.

Fig. 11b zeigt einen zwanzigsten Sägezahn 12t mit einem Befestigungsvorsprung 18t, der nach unten hin schlanker ausgebildet ist. Die Befestigungsvorsprünge 18s (siehe Fig. 11a) und 18t eignen sich besonders gut zur Befestigung der Sägezähne 12s (siehe Fig. 11a) und 12t in entsprechend ausgebildeten Sägezahnaufnahmen (nicht gezeigt).

Allgemein gesagt kann der Befestigungsvorsprung eines Sägezahns einen nicht parallelen Verlauf zu einer Mittenebene eines Sägeblattkörpers aufweisen, wie dies aus den Fig. 11a und 11b exemplarisch deutlich wird.

Fig. 12 zeigt einen Ausschnitt einer Seitenansicht eines vierten Sägeblatts 10d mit einem Sägeblattkörper 14d. An dem Sägeblattkörper 14d sind ein einundzwanzigster Sägezahn 12u und ein zweiundzwanzigster Sägezahn 12v in Sägezahnaufnahmen 38d, 38e befestigt. Im Gegensatz zu den zuvor beschriebenen Sägeblattkörpern weist der Sägeblattkörper 14d in Schnittrichtung gesehen vor den Sägezahnaufnahmen - hier den Sägezahnaufnahmen 38d, 38e - jeweils eine Erhebung 44a, 44b auf. Die Erhebungen 44a, 44b vermindern die Belastung der Sägezähne 12u und 12v. Die Erhebung 44b ist dabei einseitig zur Mittenebene des Sägeblattkörpers 14d hin abgeschrägt. Alternativ dazu kann die Erhebung 44b beidseitig zur Mittenebene des Sägeblattkörpers 14d hin abgeschrägt sein oder eine Fase aufweisen.

In der in Fig. 12 gezeigten Darstellung weisen die Erhebungen 44a, 44b jeweils einen Spalt 46a, 46b zu den Sägezähnen 12u, 12v auf. Es ist jedoch auch denkbar, keinen Spalt zwischen den Erhebungen 44a, 44b und den Sägezähnen 12u, 12v vorzusehen.

Allgemein gesagt kann eine solche radiale Erhebung des Sägeblattkörpers vor einer Sägezahnaufnahme in Verbindung mit einem beliebigen, zuvor beschriebenen Sägezahn zum Einsatz kommen.

## Patentansprüche

1. Sägezahn (12a - 12v) für ein Sägeblatt (10a - 10d),
der in seiner Längsrichtung zumindest teilweise von einem Sägeblattkörper (14a - 14d) des Sägeblatts (10a - 10d) abstehend an dem Sägeblattkörper (14a - 14d) befestigbar ist, wobei der Sägezahn (12a - 12v) einen Schneidflächenteil (15a, 15g - 15i, 15k, 15l) mit einer Schneidfläche (16a, 16b, 16e - 16g) aufweist, deren Höhe (H_{S}, H_{S}', H_{S}") sich in Längsrichtung erstreckt und deren Breite (B_{S}, B_{S}', B_{S}") sich senkrecht zur Längsrichtung erstreckt, **dadurch gekennzeichnet, dass** die Breite (B_{S}, B_{S}', B_{S}") der Schneidfläche (16a, 16b, 16e - 16g) größer ist als die Höhe (H_{S}, H_{S}', H_{S}") der Schneidfläche (16a, 16b, 16e - 16g).

2. Sägezahn nach Anspruch 1, **dadurch gekennzeichnet, dass** der Sägezahn (12a - 12o, 12q - 12v) einen in Längsrichtung von der Schneidfläche (16a, 16b, 16f, 16g) abstehenden Befestigungsvorsprung (18a - 18d, 18g - 18j, 18l, 18s, 18t) aufweist.

3. Sägezahn nach Anspruch 2, **dadurch gekennzeichnet, dass** der Befestigungsvorsprung (18l) in Längsrichtung größer ist als die Höhe der Schneidfläche.

4. Sägezahn nach Anspruch 2 oder 3, **dadurch gekennzeichnet, dass** die Breite (B_{B}) des Befestigungsvorsprungs (18a - 18d, 18g - 18j, 18l, 18s, 18t) kleiner ist als die Breite (B_{S}, B_{S}") der Schneidfläche (16a, 16b, 16f, 16g).

5. Sägezahn nach einem der Ansprüche 2 bis 4, **dadurch gekennzeichnet, dass** der Sägezahn (12a - 12h, 12l - 12o, 12q - 12v) eine sich senkrecht zur Höhe (H_{S}, H_{S}', H_{S}") der Schneidfläche (16a, 16b, 16e - 16g) und senkrecht zur Breite (B_{S}, B_{S}', Bs") der Schneidfläche (16a, 16b, 16e - 16g) erstreckende Dicke aufweist, wobei die Dicke des Schneidflächenteils (15a, 15g, 15h, 15l) der Dicke des Befestigungsvorsprungs (18a - 18d, 18g, 18h, 18l, 18s, 18t) entspricht.

6. Sägezahn nach einem der Ansprüche 2 bis 4, **dadurch gekennzeichnet, dass** die Dicke des Schneidflächenteils (15i, 15k) größer ist als die Dicke des Befestigungsvorsprungs (18i, 18j).

7. Sägezahn nach einem der Ansprüche 2 bis 6, **dadurch gekennzeichnet, dass** zumindest ein Übergang zwischen dem Schneidflächenteil und dem Befestigungsvorsprung (18b) abgerundet ausgebildet ist.

8. Sägezahn nach Anspruch 7, **dadurch gekennzeichnet, dass** alle Übergänge zwischen dem Schneidflächenteil und dem Befestigungsvorsprung (18b) abgerundet ausgebildet sind.

9. Sägezahn nach einem der vorhergehenden Ansprüche, **dadurch gekennzeichnet, dass** die Schneidfläche (16a, 16b, 16e - 16g) eine Beschichtung (32g, 32h, 32j, 32k) aufweist, deren Härte größer ist als die Härte des übrigen Schneidflächenteils (15a, 15g - 15i, 15k, 15l).

10. Sägezahn nach einem der Ansprüche 2 bis 8 in Verbindung mit Anspruch 9, **dadurch gekennzeichnet, dass** der Befestigungsvorsprung (18h, 18l) keine Beschichtung aufweist.

11. Sägezahn nach einem der vorhergehenden Ansprüche, **dadurch gekennzeichnet, dass** der Sägezahn (12c, 12d), insbesondere der Befestigungsvorsprung (18c, 18d), eine Positionierungsausnehmung (26, 28) und/oder einen Positionierungsvorsprung aufweist.

12. Sägeblatt (10a - 10d) mit einem Sägeblattkörper (14a - 14d) und zumindest einem Sägezahn (12a, 12l - 12o, 12u, 12v) nach einem der vorhergehenden Ansprüche, wobei der Sägezahn (12a, 121 - 12o, 12u, 12v) in einer Sägezahnaufnahme (38a - 38e) des Sägeblattkörpers (14a - 14d) befestigt ist.

13. Sägeblatt nach Anspruch 12 in Verbindung mit Anspruch 11, **dadurch gekennzeichnet, dass** die Sägezahnaufnahme einen mit der Positionierungsausnehmung korrespondierenden Positionsvorsprung und/oder eine mit dem Positionierungsvorsprung korrespondierende Positionsausnehmung aufweist.

14. Sägeblatt nach einem der Ansprüche 12 oder 13, **dadurch gekennzeichnet, dass** die Tiefe (T₁) der Sägezahnaufnahme (38a, 38e) in Schnittrichtung des Sägeblatts (10b, 10d) der Dicke des Schneidflächenteils (15l) und/oder der Dicke des Befestigungsvorsprungs (18l) entspricht.

15. Sägeblatt nach einem der Ansprüche 12 oder 13, **dadurch gekennzeichnet, dass** die Tiefe (T₂, T₃) der Sägezahnaufnahme (38b, 38c, 38d) in Schnittrichtung des Sägeblatts (10c, 10d) größer ist als die Dicke des Schneidflächenteils.

16. Sägeblatt nach einem der Ansprüche 12 bis 15, **dadurch gekennzeichnet, dass** das Sägeblatt (10a - 10d) in Form eines Kreissägenblatts, eines Bandsägenblatts, eines scheibenförmigen Fräsers oder eines Bügelsägenblatts ausgebildet ist.
